# EUROPÄISCHE PATENTSCHRIFT

(11) **EP 2 166 054 B1**
(45) Veröffentlichungstag und Bekanntmachung des Hinweises auf die Patenterteilung: **27.04.2011**
(21) Anmeldenummer: 09010992.7
(22) Anmeldetag: 27.08.2009
(51) Int. Cl.: C09J 111/02

(54) **Dispersionsklebstoff und Verwendung eines Dispersionsklebstoffs**
Dispersion adhesive and use of a dispersion adhesive
Colle de dispersion et utilisation d'une colle de dispersion

(30) Priorität: 29.08.2008 DE 102008044872; 08.05.2009 DE 102009020497
(43) Veröffentlichungstag der Anmeldung: 24.03.2010
(73) Patentinhaber: Wakol GmbH, 66954 Pirmasens (DE)
(72) Erfinder: Hillert, Götz, Dr., 66954 Pirmasens (DE); Schäfer, Martin, Dr., 76829 Godramstein (DE)
(74) Vertreter: Geitz Truckenmüller Lucht

(56) Entgegenhaltungen:
- EP-A1- 1 167 446
- EP-A1- 1 471 076
- EP-A1- 1 574 532

## Beschreibung

Die Erfindung betrifft Klebstoffe auf der Basis von wässrigen Polychloropren-dispersionen und deren Verwendung zum Verkleben von Schaumstoffteilen.

Zur Klebung von Schaumstoffteilen bei der Herstellung von Polstermöbeln, Matratzen und anderen Schaumstoffelementen werden Klebstoffe benötigt, die unmittelbar nach dem Fügen der geklebten Substrate eine hohe Anfangsspannung - bedingt durch starke Rückstellkräfte der verformten Schaumteile - halten. Die hierfür erforderliche Anfangsklebrigkeit weisen lösemittelhaltige Klebstoffe auf Basis von Styrolbutadienstyrolblockcopolymeren oder Styrolisoprenstyrol-blockcopolymeren auf, die zudem im erhärteten Zustand weich und elastisch bleiben und bei geklebten Matratzen oder Möbelschäumen keine störende sogenannte "harte Klebstofffugen" bilden.

Aus ökologischen und gesundheitlichen Aspekten besteht jedoch zunehmend Bedarf an Dispersionsklebstoffen auf Wasserbasis. Eine besonders geeignete Klasse wässriger Polymerdispersionen stellen hier die Chloroprendispersionen dar. In diesen Dispersionen sind die dispergierten Polymerpartikel in einem pH Bereich von ca. pH 12 durch anionische Harzseifen stabilisiert. Dieses Emulgatorsystem kann durch Herabsetzen des pH-Wertes auf pH 8,5 - 9,5 soweit destabilisiert werden, dass geringe mechanische Scherkräfte ausreichen um die Dispersion zu brechen. Dies kann in der Praxis genutzt werden, in dem z.B. durch einen Sprühauftrag die Dispersion so stark geschert wird, dass sie beim Auftreffen auf das Substrat bricht, dadurch größere klebrige Koagulatpartikel bildet und hierdurch bereits ohne weitere Verdunstung von Wasser einen klebewirksamen Film an der Substratoberfläche bildet.

Polychloropren ist ein festes Elastomer bei Raumtemperatur mit einer Shore A-Härte > 50 und ausgesprochen guten Kohäsionseigenschaften aber nur mäßigen Adhäsionseigenschaften. Zur Erhöhung der Klebrigkeit der Chloroprendispersionsklebstoffe werden häufig Phthalsäureester eingesetzt, die nach dem Einemulgieren in die wässrige Dispersion aus den Weichmachertröpfchen in die Polymerpartikel eindiffundieren. Dies führt zu einem Anquellen der Polymerpartikel in der Chloroprendispersion und einer erhöhten Klebrigkeit der Dispersion. Die Grundvoraussetzung hierfür erfüllen prinzipiell alle Phthalate, da sie eine höhere Löslichkeit in der Polymerphase als in der Wasserphase besitzen. Ihre Wirkung wird jedoch dadurch begrenzt, dass die Wasserlöslichkeit mit steigender Kettenlänge im Alkylrest abnimmt. Phthalate mit einer zu geringen Wasserlöslichkeit verbleiben in den emulgierten Weichmachertröpfchen und es kann keine Diffusion durch die wässrige Phase in die Polymerpartikel stattfinden.

Aus diesem Grund wird in der Praxis speziell die Gruppe der Phthalsäureester der Kettenlänge C4 mit einer Wasserlöslichkeit von 1-10 mg/l bei 20°C und einem POW-Wert (Logarithmus Partieller Verteilungskoeffizient Octanol/Wasser) von ca. 4 als geeignete Substanzklasse zur Erhöhung der Klebrigkeit von Chloroprendispersionen eingesetzt. Die POW-Werte der meistbenutzten Phthalate liegen für Dibutylphthalat bei 4,7 und bei Diisobutylphthalat bei 4,1. Längerkettige Phthalsäureester z.B. Diisooctylphthalt (log POW 7,5) oder Diisononylphthalat (log POW 8) eignen sich aufgrund ihrer stärkeren Hydrophobie und damit verbundenen geringeren Wasserlöslichkeit nicht dazu, in einem wässrigen Chloroprendispersionssystem über die wässrige Phase in die Polymerphase zu diffundieren.

Eine weitere Möglichkeit, die Klebrigkeit von Chloroprendispersionsklebstoffen zu erhöhen, bietet der Zusatz von Acrylsäureestercopolymerdispersionen, Harzdispersionen auf Basis von Balsamharzen oder Terpen-Phenolharzen. Polychloropren-Dispersionen mit Acrylsäureestercopolymerdispersionen oder Harzdispersionen zeigen neben einer verbesserten Haftung an den zu verklebenden Teilen (Klebrigkeit) auch eine erhöhte Anfangsklebrigkeit.

Zudem sind wässrige Chloroprendispersionsklebstoffe in der Praxis häufig niedrigen Transport- und Applikationstemperaturen von bis zu + 5°C ausgesetzt. Die Gruppe der Phthalate findet hierbei ebenfalls Anwendung, um dem Klebstoff bei diesen Temperaturen eine Stabilität (nur geringer Viskositätsanstieg) zu verleihen. Hierfür geeignete Phthalsäureester besitzen einen Schmelzpunkt von < 0°C. Insbesondere Phthalsäureester wie Dibutylphthalat mit einem Schmelzpunkt von -35°C oder Diisobutylphthalat mit einem Schmelzpunkt von -64°C werden eingesetzt.

Alle oben aufgeführten Zusätze weisen jedoch erhebliche Nachteile auf, da beispielsweise Acrylsäureestercopolymerdispersionen immer Anteile von Restmonomeren mit einer extrem niedrigen Geruchsschwelle (z.B. Butylacrylat ca. 0,19 mg/m³) enthalten. Der typische Geruch von Acrylatdispersionen wird sowohl bei der Sprühapplikation der Materialien als unangenehm empfunden, als auch bei der späteren Nutzung und ist insbesondere bei Matratzen unerwünscht.
Harzdispersionen auf Basis von Balsamharzen und Terpen-Phenolharzen weisen ebenfalls immer einen typischen Harzgeruch" auf, der als störend empfunden wird. Phthalate stehen unter dem Verdacht, reproduktionstoxisch zu sein und werden daher von vielen Matratzen- und Polstermöbelherstellern abgelehnt.

Aufgabe der vorliegenden Erfindung war es daher, einen Klebstoff zur Verklebung von Schaumstoffteilen bereitzustellen, der eine hohe Anfangsklebrigkeit besitzt, eine weiche Klebstofffuge bildet und dabei frei von Verbindungen mit niedriger Geruchsschwelle und frei von reproduktionstoxischen Stoffen ist sowie selbst bei niederen Temperaturen stabil bleibt.

Diese Aufgabe wird durch eine Klebstoffzusammensetzung mit den Merkmalen des Anspruchs 1 gelöst. Es wurde gefunden, dass Terephthalsäuredialkylester leicht in die wässrige Phase einemulgiert werden können und die Terephthalsäuredialkylester in kurzer Zeit über die Wasserphase in die Polymerpartikel eindiffundieren.

Dies war aus folgenden Gründen sehr überraschend. Aus der Literatur ist seit langem bekannt, dass die bisher untersuchten Terephthalsäureester einen um etwa eine Zehnerpotenz höheren partiellen Verteilungskoeffizienten Octan/Wasser besitzen, als die analogen Phthalsäureester, wie aus der nachfolgenden Tabelle ersichtlich ist. Aufgrund Ihrer stärkeren Hydrophobie und damit verbundenen geringeren Wasserlöslichkeit galten selbst Terephthalate mit kurzen Seitenketten wie Dibutylterephthalat als ungeeignet, um in einem wässrigen Chloroprendispersionssystem über die wässrige Phase in die Polymerphase eindiffundieren zu können.

**Tabelle 1: log POW-Werte von DBP (Dibutylphthalat), DIBP (Diisobutylphthalat), DOP (Di-2-ethylhexylphthalat), DBT (Dibutylterephthalat) und DOT (Di-2-ethyhlhexylterephthalat); (Quellen: Gefahrenstoffdatenbank "International Chemical Safety Cards" herausgegeben durch das National Institute for Occupational Safety and Health, Cincinnati, OH, USA und Datenbanksammlung Chemspider, Building community for chemists).**

| | Phthalat | Terephthalat25 |
|---|---|---|
| | | |
| Dibutyl- | Log POW 4,7 | Log POW 5,6 |
| Diisobutyl- | Log POW 4,1 | n.b. 30 |
| Di-2- ethylhexyl- | Log POW 7,5 | Log POW 8,6 |

| | | |
|---|---|---|
| n.b. = nicht bekannt. | | |

Zudem ist aus der Literatur seit langem bekannt, dass die Schmelzpunkte kurzkettiger Phthalsäureester (< C6 im Alkylrest) signifikant niedriger liegen als die der isomeren Terephthalsäureester. So liegt beispielsweise der Schmelzpunk von Di-n-butylphthalat bei -35°C, während Di-n-butylterephthalat einen Schmelzpunkt von 16°C (Pfannl, Michael; Monatshefte für Chemie 1911, V 32, P509-22) aufweist. Daher galten die Terephthalsäureester mit einem Schmelzpunkt von >5°C als a priori ungeeignet, um als Weichmacher die Stabilität von wässrigen Chloroprenklebstoffen bei niedrigen Temperaturen von bis zu +5 °C zu gewährleisten. Erst durch die Anwesenheit höherer Kettenlängen finden sich auch bei den Terephthalsäureestern niedrige Schmelzpunkte. So zeigen z.B. die Verbindungen Di-2-ethylhexylphthalat und Di-2-ethylhexylterephthalat nahezu vergleichbare Schmelzpunkte von -50°C respektive -48°C.

**Tabelle 1: Schmelzpunkte von DMP (Dimethylphthalat), DBP (Dibutylphthalat), DIBP (Diisobutylphthalat), DOP (Di-2-ethylhexylphthalat), DMT (Dimethylterephthalat), DBT (Dibutylterephthalat) und DOT (Di-2-ethyhlhexylterephthalat); (Quellen: Gefahrenstoffdatenbank "International Chemical Safety Cards" herausgegeben durch das National Institute for Occupational Safety and Health, Cincinnati, OH, USA und Pfannl, Michael; Monatshefte für Chemie 1911, V 32, P509-22).**

| | Phthalat | Terephthalat |
|---|---|---|
| Dimethyl- | Schmp. 6°C | Schmp. 139 °C |
| Dibutyl- | Schmp. -35°C | Schmp. 16°C |
| Diisobutyl- | Schmp. - 64°C | n.b. 20 |
| Di-2-ethylhexyl- | Schmp. - 50°C | Schmp. - 48°C |

| | | |
|---|---|---|
| n.b. = nicht bekannt. | | |

Die erfindungsgemäße Klebstoffzusammensetzung bleibt selbst bei niedrigen Temperaturen stabil und zeigt eine hohe Anfangsklebrigkeit. Sie eignet sich hervorragend als Sprühklebstoff zur Verklebung von Schaumstoffteilen.

Darüber hinaus ist die erfindungsgemäße Klebstoffzusammensetzung im Gegensatz zu Klebstoffzusammensetzungen, die Acrylsäureestercopolymerdispersionen oder Harzdispersionen enthalten, geruchsneutral. Ausserdem bewirkt die Quellung der Polymerpartikel durch Terephthalsäuredialkylester eine Erweichung der Polymere, was sich im ausgehärteten Klebstoff positiv auswirkt, wenn es um die Klebung von weichen Substraten, wie z.B. Schaumstoffen in der Matratzen- und Möbelfertigung geht, da keine "harten Klebstoffnähte" entstehen. Gegenüber Phthalaten besitzen die Terephthalate der erfindungsgemäßen Klebstoffzusammensetzung den Vorteil, dass sie weder carcinogen, noch mutagen oder reproduktionstoxisch sind.

Nach einer vorteilhaften Ausgestaltung der Erfindung sind in der Klebstoffzusammensetzung auf 100 Teile der Polychloroprendispersion zwischen 30 und 60 Teile Terephthalsäuredialkylester, jeweils bezogen auf den Festkörpergehalt, zugemischt. Eine bevorzugte Klebstoffzusammensetzung weist zwischen 45 und 55 Teile Terephthalsäuredialkylester auf 100 Teile Polychloroprendispersion auf. In der Praxis liegt das Mischungsverhältnis oft bei etwa 50 Teilen Terephthalsäuredialkylester auf 100 Teile Polychloroprendispersion.

Nach einer weiteren vorteilhaften Ausgestaltung der Erfindung weisen die Terephthalsäuredialkylester 1 bis 9 Kohlenstoffatome im Alkylrest auf, bevorzugt 1 bis 5 Kohlenstoffatome.

Nach einer weiteren vorteilhaften Ausgestaltung der Erfindung handelt es sich bei dem Terephthalsäuredialkylester um Dibutylterephthalat. Die sehr starke Quellwirkung des Dibutylterephthalats kann durch die Zunahme der Partikelgrößenverteilung nachgewiesen werden. Hierfür wird eine definierte Menge einer Chloroprendispersion (79 g; entspricht 43,5 g Polychloropren) mit einer definierten Menge Dibutylterephthalat (21 g) für 15 Minuten gerührt und nach 24 Stunden die Partikelgrößenverteilung mittels dynamischer Lichtstreuung bestimmt. Die Partikelgrößenverteilung wird mit der der reinen Polychloroprendispersion verglichen.

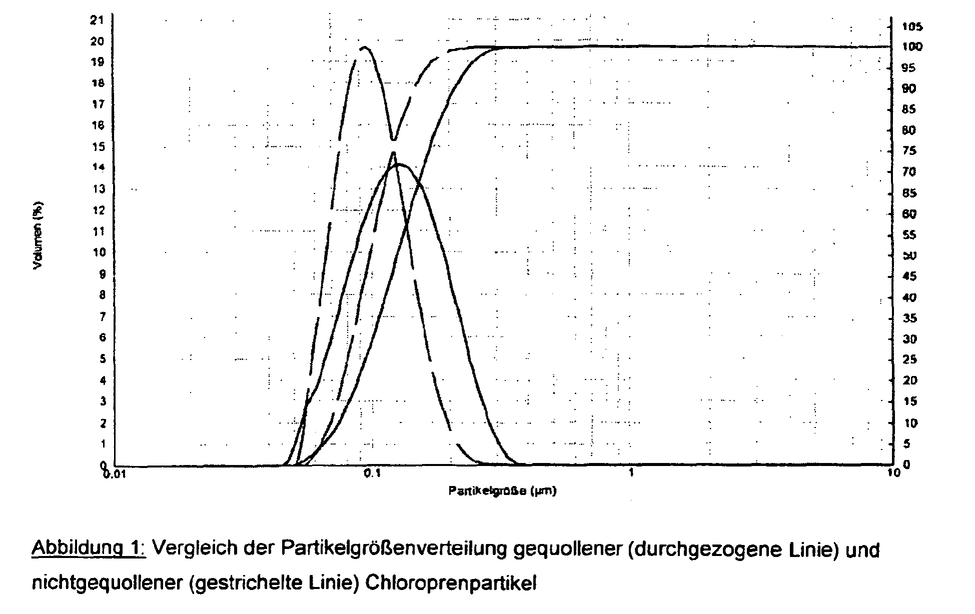

Wie aus der Abbildung 1 ersichtlich wird, quellen die Partikel der Chloroprendispersion durch die Zugabe von Dibutylterephthalat sehr stark an, das Gewichtsmittel des Durchmessers steigt von 116 nm auf 157 nm also um 35 %.

Aus diesem Grund können auch sehr hohe Konzentrationen von Dibutylterephthalat in die Polymerpartikel von Polychloroprendispersionen eingebracht werden, was die Bereitstellung von extrem klebrigen Klebstoffen mit sehr hoher Initialkraft (Anfangsklebrigkeit) zulässt.

Durch die starke Quellwirkung der Polymerteilchen liegt das Dibutylterephthalat offensichtlich in molekular gelöster Form im Chloroprenpolymeren vor, wodurch die intermolekularen Kräfte so stark herabgesetzt werden, dass eine Kristallisation des Dibutylterephthalts, wie beim Erstarren des flüssigen DBT bei 16°C, selbst bei niedrigen Transport- und Applikationstemperaturen, wie 5°C, verhindert wird.

Vergleichende Untersuchungen, die durchgeführt wurden und bei denen die Chloroprenpartikel mit der gleichen Menge an dem reproduktionstoxischen Diisobutylphthalat angeqollen wurden, zeigten zwar ebenfalls einen Anstieg des Gewichtsmittels des Durchmessers. Der Anstieg erfolgte jedoch lediglich von 116 nm auf 148 nm also nur um 27 %.

Die folgenden Beispiele dienen lediglich der Erläuterung der Erfindung und sollen diese in keiner Weise beschränken:

### Allgemeine Beschreibung der Klebstoffzusammensetzung:

- Komponente A: (Chloroprenedispersion)
- Komponente B: (Emulgatoren)
- Komponente C: (Terephthalsäuredialkylester, Dibutylterephthalat)
- Komponente D: (pH-Puffersubstanz)
- Komponente E: zu 100 % ergänzende Zuschlagstoffe

### Komponente A

Als Chloroprendispersionen kommen prinzipiell alle marktüblichen Dispersionen von Poly-2-chlor-1,3-butadien wie z.B. Dispercoll C84 (Fa. Bayer) sowie Copolymerisats aus 2-Chlor-1,3-butadien und des 2,3-Dichlor-1,3-butadien wie z.B., Dispercoll C VPLS 2372H zum Einsatz.

### Komponente B

Als Emulgatoren kommen nichtionische Emulgatoren zum Einsatz aus der Gruppe der Acyl-, Alkyl-, Oleyl- und Alkylarylethoxylate, insbesondere der ethoxylierten Mono-, Di-, und Tri-Alkylphenole mit einem EO-Grad von 3 bis 50 und Alkylsubstituentenresten von C 4 bis C 12, der ethoxylierten Fettalkohole mit einem EO-Grad von 3 bis 80 und Alkylresten von C8 bis C 36, des Polyoxyethylensorbitanmonooleats mit 20 Ethylenoxidgruppen der Copolymeren aus Ethylenoxid und Propylenoxid mit einem Mindestgehalt von 10 Gew.% Ethylenoxid, die Polyethylenoxid(4-40)-Ether von Oleylalkohol sowie der Polyethenoxid(4-40)Ether von Nonylphenol. Es kommen weiter anionischen Emulgatoren in Frage aus der Gruppe der Natrium-, Kalium-, und Ammoniumsalze von geradkettigen aliphatischen Carbonsäuren der Kettenlänge C 12 bis C 20 des Natriumhydroxyoctadecansulfonats, der Natrium-, Kalium-, und Ammoniumsalze von Hydroxyfettsäuren der Kettenlänge C12 bis C20 und deren Sulfonierungs-, Sulfatierungs-, und/oder Acetylierungsprodukten, der Alkylsulfate, gegebenenfalls vorliegend als Triethanolaminsalze, der Alkyl-(c10-C20)-sulfonate, der Alkyl(C10-C20)-arylsulfonate, des Dimethyldialkyl(C8-C18)-ammoniumchlorids, und deren Sulfierungsprodukten, der Ligninsulfonsäure sowie deren Calcium-, Magnesium, Natrium und Ammoniumsalze, der Harzsäuren, der hydrierten und dehydrierten Harzsäuren sowie deren Alkalisalzen, des dodecylierten Diphenyletherdisulfonsauren Natriums, des Natriumlaurylsulfats des ethoxylierten Natriumlaurylethersulfats mit vorzugsweise einem EO-Grad von 3-7 oder des Salzes eines Biesters, vorzugsweise eines Bis-C4-C18-Alkylesters, einer sulfonierten Dicarbonsäure mit 4 bis 8 Kohlenstoffatomen oder eines Gemisches dieser Salze, vorzugsweise der sulfonierten Salze Salzen von Estern der Bernsteinsäure, besonders bevorzugt der Salze, wie der Alkalimetallsalze, von Bis-C4-C18-Alkylestern sulfonierter Bernsteinsäure.

### Komponente C

Terephthalsäuredialkylester, insbesondre Terephthalsäuredialkylester Dibutylterephthalat

### Komponente D

Als Substanz zur Abpufferung des pH-Wertes von ca. 12 auf einen Bereich von ca. 9-9,5 kommen prinzipiell alle schwach basischen Substanzen mit einem pKs Wert zwischen 8 und 10 in Frage. Vorzugsweise eignen sich Puffer aus der Gruppe der Aminosäuren wie z.B. Glycin, Asparagin oder Glycylglycin, sowie Glyoxal.

### Komponente E

Als zu 100 % ergänzende Zuschlagstoffe werden Entschäumer, aus der Gruppe der der niedrigmolekularen Polysiloxane wie z.B. Polydimethylsiloxane, Fluorosilicone oder Siliconglycole, der Mineralöle oder der Polyalkylacrylate, Alterungsschutzmittel, aus der Gruppe der sterisch gehinderten Phenole und ggf. Farbstoffe, Füllstoffe wie ZnO oder MgO, Stabilisatoren und/oder Antioxidantien eingesetzt.

### Beispiel 1 (erfindungsgemäßes Beispiel)

Es wird ein Klebstoff unter Verwendung folgender Komponenten mit Angaben zum jeweiligen Verwendungszweck, Lieferanten, zur chemischen Basis und Produktbezeichnung hergestellt.

Die Prozentangaben beziehen sich auf das Komponentengewicht (Gew.-%):
- 66 %: Bindemittel, Poly-2-chlorbutadien-(1,3)-Dispersion ca. 55 % in Wasser, (Dipercoll C 84, Fa. Bayer)
- 9,4%: Wasser
- 0,3%: Emulgator, Alkylphenolethoxylat, sulfatiert, Natriumsalz in Wasser, (Emulphor OPS 25, Fa. BASF)
- 17,5%: Dibutylterephthalat, (Dibutyl Terephthalate, Fa. Eastman)
- 1,8%: Verdickerlösung, Lösung einer wässrigen Dispersion von Polyacrylsäureester, Carbonsäuren (ungesättigt) ca. 5 % in Wasser, (Latecoll D Verdickerlösung 5 %, Latecoll D, Fa. BASF)
- 5,0 %: Puffersystem, Lösung einer Aminosäure Glycin 15 % in Wasser

| | |
|---|---|
| Viskosität nach Brookfield: | S 2/G 20, 20 °C: ca. 1.200 mPas |
| Festkörpergehalt: | ca. 55 % |
| pH-Wert: | ca. 9,3 |

### Vergleichsbeispiel 2

Es wird ein Klebstoff unter Verwendung folgender Komponenten mit Angaben zum jeweiligen Verwendungszweck, Lieferanten, zur chemischen Basis und Produktbezeichnung hergestellt.

Die Prozentangaben beziehen sich auf das Komponentengewicht (Gew.-%):
- 66 %: Bindemittel, Poly-2-chlorbutadien-(1,3)-Dispersion ca. 55 % in Wasser, (Dipercoll C 84, Fa. Bayer)
- 9,4%: Wasser
- 0,3%: Emulgator, Alkylphenolethoxylat, sulfatiert, Natriumsalz in Wasser, (Emulphor OPS 25, Fa. BASF)
- 17,5%: Düsobutylphthalat, (DIBP, Fa. BASF)
- 1,8%: Verdickerlösung, Lösung einer wässrigen Dispersion von Polyacrylsäu- reester, Carbonsäuren (ungesättigt) ca. 5 % in Wasser, (Latecoll D Verdickerlösung 5 %, Latecoll D, Fa. BASF)
- 5,0 %: Puffersystem, Lösung einer Aminosäure Glycin 15 % in Wasser

| | |
|---|---|
| Viskosität nach Brookfield: | S 2/G 20, 20 °C: ca. 1.200 mPas |
| Festkörpergehalt: | ca. 55 % |
| pH-Wert: | ca. 9,3 |

### Vergleichsbeispiel 3

Es wird ein Klebstoff unter Verwendung folgender Komponenten mit Angaben zum jeweiligen Verwendungszweck, Lieferanten, zur chemischen Basis und Produktbezeichnung hergestellt.

Die Prozentangaben beziehen sich auf das Komponentengewicht (Gew.-%):
- 25%: Bindemittel, Polyacrylatdispersion ca. 57 % in Wasser, (Primal EP-6550, Fa. ROHM AND HAAS)
- 25%: Bindemittel, wässrige Dispersion auf Basis Butadien-Styrol- Copolymere, 54 % Styrol, 44 % Butadien, 2 % Säuregehalt, (Synthomer 45B45, Fa. Synthomer)
- 0,5%: Emulgator, Arylethylphenylpolyglykolether, (Emulvin WA, Fa. LANXESS)
- 0,5%: pH-Reduzierer, Ethandial (Trivialname: Glyoxal) 40 % in Wasser, (Glyoxal-Lösung 40 % in Wasser, Fa. MERCK)
- 50 %: Bindemittel, Poly-2-chlorbutadien-(1,3)-Dispersion ca. 55 % in Wasser, (Dipercoll C 84, Fa. Bayer)

| | |
|---|---|
| Viskosität nach Brookfield: | S 1/G 20, 20 °C: ca. 50 mPas |
| Festkörpergehalt: | ca. 54 % |
| pH-Wert: | ca. 8,5 |

### Vergleichsbeispiel 4

Es wird ein Klebstoff unter Verwendung folgender Komponenten mit Angaben zum jeweiligen Verwendungszweck, Lieferanten, zur chemischen Basis und Produktbezeichnung hergestellt.

Die Prozentangaben beziehen sich auf das Komponentengewicht (Gew.-%):
- 56 %: Bindemittel, Poly-2-chlorbutadien-(1,3)-Dispersion ca. 55 % in Wasser, (Dipercoll C 84, Fa. Bayer)
- 0,2 %: Emulgator, Alkylphenolethoxylat, sulfatiert, Natriumsalz in Wasser, (Emulphor OPS 25, Fa. BASF)
- 1,9%: Verdickerlösung, Lösung einer wässrigen Dispersion von Polyacrylsäureester, Carbonsäuren (ungesättigt) ca. 8 % in Wasser, (Latecoll D Verdickerlösung 8 %, Latecoll D, Fa. BASF)
- 40 %: Harzdispersion/Adhäsiv, Harzester, (Snowtack SE 781 A, Fa. HEXION)
- 2,4%: Kaliumhydroxid-Lösung 10 % in Wasser

| | |
|---|---|
| Viskosität nach Brookfield: | S 2/G 20, 20 °C: ca. 1200 mPas |
| Festkörpergehalt: | ca. 52 % |
| pH-Wert: | ca. 9,2 |

### Prüfung der Anfangsklebrigkeit / Initialkraft

Zur Ermittlung der Initialkraft wird ein 10 X 5 X 1 cm (L, B, H) Schaumstoffsubstrat mit dem jeweiligen Klebstoff mittels Sprühauftrag gleichmäßig benetzt, die beiden Enden des rechteckigen Prüflings durch leichtes Andrücken gegeneinander gefügt und so eine Kontaktklebung mit wenig Druckaufwand aber aufgrund der Rückstellkräfte verhältnismäßig hoher Spannung simuliert.

Die Anfangsklebrigkeit wird durch den benötigten Kraftaufwand zur Lösung dieser Klebung subjektiv beurteilt und nach dem Schulnotensystem quantifiziert.

Dieser Test kann auch im Vergleich mit Kuben einer Kantenlänge von 10,5 cm durchgeführt werden. Der Klebstoff wird analog auf eine der sechs Würfelflächen aufgetragen und zwei gegenüberliegende Kanten im Kontakt miteinander verklebt. Die hier erzeugte sogenannte Knipsnaht bedarf zwar stets eines deutlich höheren Druckaufwandes, muss aber dafür gleichzeitig noch höhere Rückstellkräfte aushalten. Beurteilt wird die Tatsache, ob die Knipsnaht im Vergleich zu einem erprobten Klebstoffsystem gehalten werden kann.
- 1 sehr gut:: Spannung wird bei einmaligem leichtem, kurzen Andrücken (ca. 1 s) sofort gehalten
- 2 gut:: Spannung wird gehalten, aber es muss 2 mal ca. 1 s angedrückt werden
- 3 befriedigend:: Spannung wird gehalten aber es muss mehrfach fest angedrückt werden
- 4 schlecht:: Die Spannung wird selbst bei mehrmaligem andrücken nicht gehalten

### Prüfung der Schore A Härte

Durch 4 tägiges Trocknen des Klebstoffes bei Raumtemperatur in einer entsprechenden Form wurden 6 mm dicke freie Filme hergestellt. An diesen Filmen wurde gemäß DIN 53305 die Shore A Härte bei 23°C bestimmt.

### Ermittlung des Speichermoduls G' mittels eines Haake Rheometers

Die Bestimmung der dynamisch mechanischen Eigenschaften (Speichermodul; Verlustmodul, tan d) wurde mittels einer oszillierenden Messung an 2 mm starken freien Filmen mit dem Platte/Platte System mit einem Haake RS 80, bei einer Frequenz von 1 Hz, bei konstanter Deformation im Temperaturbereich von 20°C bis 130°C durchgeführt.

### Prüfung der Stabilität bei 5°C

Zur Prüfung der Tieftemperaturstabilität des Klebstoffes bei 5°C werden Klebstoffproben für 48 Stunden bei 5°C gelagert und anschließend ein Glasaufstrich durchgeführt. Der Klebstoff muss einen glatten Film zeigen, der frei von Stippen bzw. Koagulat ist.

### Prüfung des Klebstoffgeruchs:

Die Geruchsprüfung der flüssigen Klebstoffe wurde in Anlehnung an die Schweizer Norm SNV 195651 durchgeführt. Bei diesem in der Bodenbelagsbranche bewährten Prüfverfahren beurteilen mehrere Personen unabhängig voneinander den Geruch der Proben. Die Beurteilung erfolgt durch mindestens drei Personen sensitiv über die Geruchsintensität nach den folgenden Kriterien:

| | |
|---|---|
| 1 | nicht wahrnehmbar |
| 2 | wahrnehmbar, nicht störend |
| 3 | deutlich wahrnehmbar, aber noch nicht störend |
| 4 | Störend |
| 5 | Stark störend |
| 6 | Unerträglich |

### Ergebnisse:

**Tabelle 3: Übersicht der Ergebnisse, Beispiele 1 bis 4; i.O.: glatter Klebstofffilm, frei von Stippen und Koagulat**

| | Beispiel 1 (erfindungsgemäß) | Vergleichsbeispiel 2 | Vergleichsbeispiel 3 | Vergleichsbeispiel 4 |
|---|---|---|---|---|
| Mittlerer Partikeldurchmesser | 157 nm | 148 nm | 116 nm | 120 nm |
| Quellung der Polychloroprene-partikel | 35% | 27% | - | - |
| Geruchsprüfung | 2 | 2 | 4 | 4 |
| Anfangsfestigkeit | 1 | 2 | 3 | 4 |
| Shore A | 39 | 45 | 47 | 53 |
| Speichermodul G'bei 20°C | 200.000 | 300.000 | 420.000 | 1.100.000 |
| E-Modul 25 % | 0,1 N/mm² | 0,2 N/mm² | 0,2 N/mm² | 0,4 N/mm² |
| E-Modul 300 % | 0,3 N/mm² | 0,6 N/mm² | 0,3 N/mm² | 1,0 N/mm² |
| Stabilität bei 5°C | i.O. | i.O. | i.O. | i.O. |

Wie der Tabelle 3 zu entnehmen ist, zeigt das erfindungsgemäße Beispiel 1 die stärkste Quellwirkung der eingesetzten Polychloroprenepartikel. Die starke Aufquellung der Partikel bewirkt die höchste extrem hohe Initalkraft (Anfangsklebrigkeit) verbunden mit einer ausgesprochen weichen Klebstoffuge (Shore A < 40; geringste Speicher und Elastizitätsmodule). Der Klebstoff ist geruchsneutral und frei von reproduktionstoxischen, carcinogenen und mutagenen Substanzen und erfüllt damit alle an die Aufgabe der Erfindung gestellten Anforderungen.

Selbst bei Chloroprendispersionsklebstoffen, denen auf herkömmliche Weise Acrylsäureestercopolymerisatdispersionen zur Steigerung der Anfangsklebrigkeit beigemengt werden und die mit den oben bereits beschriebenen Nachteilen behaftet sind, ist der Vorteil der Erfindung so groß, dass eine zusätzliche Steigerung der Anfangsklebrigkeit und eine höhere Weichheit der Klebstofffuge erzielt wird. Ein Vergleich der Beispiele 5 und 6 belegt dies:

### Beispiel 5

Es wird ein Klebstoff unter Verwendung folgender Komponenten mit Angaben zum jeweiligen Verwendungszweck, Lieferanten, zur chemischen Basis und Produktbezeichnung hergestellt.

Die Prozentangaben beziehen sich auf das Komponentengewicht (Gew.-%):
- 59,5 %: Bindemittel, Poly-2-chlorbutadien-(1,3)-Dispersion ca. 55 % in Wasser, (Dipercoll C 84, Fa. Bayer)
- 6,3%: Wasser
- 0,1 %: Emulgator, Arylethylphenylpolyglykolether, (Emulvin WA, Fa. LANXESS)
- 16 %: Dibutylterephthalat, (Dibutyl Terephthalate, Fa. Eastman)
- 0,6 %: Verdickerlösung, Lösung einer wässrigen Dispersion von Polyacrylsäureester, Carbonsäuren (ungesättigt) ca. 5 % in Wasser, (Latecoll D Verdickerlösung 5 %, Latecoll D, Fa. BASF)
- 6,0 %: Puffersystem, Lösung einer Aminosäure Glycin 15 % in Wasser
- 11,5%: Bindemittel, 50% wässrige Dispersion auf Basis Acrylsäureester- Styrol-Copolymere, Tg 22°C (Acronal 290 D, Fa. BASF)

| | |
|---|---|
| Viskosität nach Brookfield: | S 2/G 20, 20 °C: ca. 1200 mPas |
| Festkörpergehalt: | ca. 55 % |
| pH-Wert: | ca. 9,3 |

### Vergleichsbeispiel 6

Es wird ein Klebstoff unter Verwendung folgender Komponenten mit Angaben zum jeweiligen Verwendungszweck, Lieferanten, zur chemischen Basis und Produktbezeichnung hergestellt.

Die Prozentangaben beziehen sich auf das Komponentengewicht (Gew.-%):
- 59,5 %: Bindemittel, Poly-2-chlorbutadien-(1,3)-Dispersion ca. 55 % in Wasser, (Dipercoll C 84, Fa. Bayer)
- 6,3%: Wasser
- 0,1 %: Emulgator, Arylethylphenylpolyglykolether, (Emulvin WA, Fa. LANXESS)
- 16 %: Diisobutylphthalat, (DIBP, Fa. BASF)
- 0,6 %: Verdickerlösung, Lösung einer wässrigen Dispersion von Polyacryl- säureester, Carbonsäuren (ungesättigt) ca. 5 % in Wasser, (Latecoll D Verdickerlösung 5 %, Latecoll D, Fa. BASF)
- 6,0 %: Puffersystem, Lösung einer Aminosäure Glycin 15 % in Wasser
- 11,5%: Bindemittel, 50% wässrige Dispersion auf Basis Acrylsäureester-Styrol- Copolymere, Tg 22°C (Acronal 290 D, Fa. BASF)

| | |
|---|---|
| Viskosität nach Brookfield: | S 2/G 20, 20 °C: ca. 1200 mPas |
| Festkörpergehalt: | ca. 55 % |
| pH-Wert: | ca. 9,3 |

**Tabelle 4: Übersicht der Ergebnisse, Beispiele 5 und 6; i.O.: glatter Klebstofffilm, frei von Stippen und Koagulat**

| | Beispiel 5 | Vergleichsbeispiel 6 |
|---|---|---|
| Shore A | 43 | 48 |
| Speichermodul G'bei 20°C | 250.000 | 350.000 |
| E-Modul 25 % | 0,3 N/mm² | 0,6 N/mm² |
| E-Modul 300 % | 1,0 N/mm² | 1,6 N/mm² |
| Anfangsfestigkeit | 1 | 2 |
| Stabilität bei 5°C | i.O. | i.O. |

Wie Tabelle 2 zeigt, bewirkt die Zugabe von Dibutylterephthalat im Vergleich zur Zugabe von Diisobutylphthalat zu einem Dispersionsklebstoffsystem auf Baisis von einer Chloroprenpolymerisatdispersion in Kombination mit einer Acrylsäureestercopolymerisat-dispersion ebenfalls eine höhere Anfangsklebrigkeit und weichere Klebefuge.

## Patentansprüche

1. Klebstoffzusammensetzung auf der Basis einer wässrigen Polychloroprendispersion, enthaltend Terephthalsäuredialkylester.

2. Klebstoffzusammensetzung gemäß Anspruch 1, **dadurch gekennzeichnet, dass** auf 100 Teile der Polychloroprendispersion zwischen 30 und 60 Teile Terephthalsäuredialkylester, bevorzugt zwischen 45 und 55 Teile, jeweils bezogen auf den Festkörpergehalt, zugemischt sind.

3. Klebstoffzusammensetzung gemäß Anspruch 1 oder 2, **dadurch gekennzeichnet, dass** die Terephthalsäuredialkylester 1 bis 9 Kohlenstoffatome im Alkylrest aufweisen, bevorzugt 1 bis 5 Kohlenstoffatome.

4. Klebstoffzusammensetzung nach einem der vorhergehenden Ansprüche, **dadurch gekennzeichnet, dass** der Terephthalsäuredialkylester Dibutylterephthalat ist.

5. Klebstoffzusammensetzung gemäß einem der vorhergehenden Ansprüche, **dadurch gekennzeichnet, dass** die Polychloroprendispersion eine Dispersionen von Homo- oder Copolymeren des 2-Chlor-1,3-butadien und des 2,3-Dichlor-1,3-butadien ist.

6. Klebstoffzusammensetzung nach einem der vorhergehenden Ansprüche, **dadurch gekennzeichnet, dass** Emulgatoren, insbesondere nichtionische Emulgatoren aus der Gruppe der Acyl-, Alkyl-, Oleyl und Alkylarylethoxylate und/oder anionische Emulgatoren enthalten sind.

7. Klebstoffzusammensetzung nach einem der vorhergehenden Ansprüche, **dadurch gekennzeichnet, dass** mindestens ein schwach basischer Puffer mit einem pKs-Wert zwischen 8 und 10 enthalten ist.

8. Klebstoffzusammensetzung nach einem der vorhergehenden Ansprüche, **dadurch gekennzeichnet, dass** Zuschlagstoffe wie Füllstoffe, Entschäumer, Pigmente, Stabilisatoren und/oder Antioxidantien zugemischt sind.

9. Verwendung einer Klebstoffzusammensetzung gemäß einem der Ansprüche 1 bis 8 zur Verklebung von Schaumstoffteilen wobei der Klebstoffauftrag durch Sprühen oder Walzenapplikation erfolgt.

10. Verwendung von Terephthalsäuredialkylestern zur Erhöhung der Anfangsklebrigkeit von Chloroprendispersionsklebstoffen.

## Claims

1. Adhesive composition with a basis of an aqueous polychloroprene dispersion, containing dialkyl esters of terephthalic acid.

2. Adhesive composition according to claim 1, **characterised in that** between 30 and 60 parts of dialkyl esters of terephthalic acid, but preferably between 45 and 55 parts, are incorporated per 100 parts of polychloroprene dispersion, in each case based on the solids content.

3. Adhesive composition according to claims 1 or 2, **characterised in that** the dialkyl esters of terephthalic acid exhibit 1 to 9 carbon atoms in the alkyl radical, but preferably 1 to 5 carbon atoms.

4. Adhesive composition according to one of the previous claims, **characterised in that** the dialkyl ester of terephthalic acid is dibutyl terephthalate.

5. Adhesive composition according to one of the previous claims, **characterised in that** the polychloroprene dispersion is a dispersion of homo- or copolymers of 2-chloro-1,3-butadiene and of 2,3-dichloro-1,3-butadiene.

6. Adhesive composition according to one of the previous claims, **characterised in that** it contains emulsifiers, and particularly non-ionic emulsifiers, from the group of acyl, alkyl, oleyl and alkylaryl ethoxylates and/or anionic emulsifiers.

7. Adhesive composition according to one of the previous claims, **characterised in that** it contains at least a weakly alkaline buffer with a pKa value of between 8 and 10.

8. Adhesive composition according to one of the previous claims, **characterised in that** additives such as fillers, defoaming agents, pigments, stabilisers and/or antioxidants are incorporated.

9. Use of an adhesive composition according to one of the claims 1 to 8 for the bonding of foam parts, with the adhesive applied by means of spraying or by rollers.

10. Use of dialkyl esters of terephthalic acid to increase the initial tack of chloroprene dispersion adhesives.

## Revendications

1. Composition de colle sur la base de polychloroprène en dispersion aqueuse, contenant de l'ester dialkyle d'acide téréphtalique.

2. Composition de colle selon la revendication 1, **caractérisée en ce que** sur 100 parts de dispersion de polychloroprène sont ajoutées entre 30 et 60 parts d'ester dialkyle d'acide téréphtalique, mais de préférence de 45 à 55 parts, respectivement par rapport à l'extrait sec.

3. Composition de colle selon la revendication 1 ou 2, **caractérisée en ce que** l'ester dialkyle d'acide téréphtalique présente de 1 à 9 atomes de carbone dans le résidu d'alkyle, mais de préférence de 1 à 5 atomes de carbone.

4. Composition de colle selon l'une quelconque des revendications ci-dessus, **caractérisée en ce que** l'ester dialkyle d'acide téréphtalique est du téréphtalate de dibutyle.

5. Composition de colle selon l'une quelconque des revendications ci-dessus, **caractérisée en ce que** la dispersion de polychloroprène est une dispersion d'homopolymères ou de copolymères de 2-chloro-1,3-butadiène et de 2,3-dichloro-1,3-butadiène.

6. Composition de colle selon l'une quelconque des revendications ci-dessus, **caractérisée en ce que** des émulsifiants, en particulier des émulsifiants non ioniques du groupe des éthoxylates d'acyle, d'alkyle, d'oléyle et d'alkylidène et/ou des émulsifiants anioniques sont contenus.

7. Composition de colle selon l'une quelconque des revendications ci-dessus, **caractérisée en ce qu'**au minimum un tampon faiblement basique avec une valeur de pKs comprise entre 8 et 10 est contenu.

8. Composition de colle selon l'une quelconque des revendications ci-dessus, **caractérisée en ce que** des additifs comme des matières de charge, des agents anti-mousse, des pigments, des stabilisateurs et/ou des antioxydants y sont ajoutés.

9. Utilisation d'une composition de colle selon l'une quelconque des revendications 1 à 8 pour le collage d'éléments en mousse, l'application de la colle s'effectuant par vaporisation ou au rouleau.

10. Utilisation d'esters dialkyles d'acide téréphtalique pour faire augmenter l'adhésivité initiale de colles de dispersion au chloroprène.
